# EUROPEAN PATENT APPLICATION

(11) **EP 4 105 548 A1**
(43) Date of publication of application: **21.12.2022**
(21) Application number: 21179964.8
(22) Date of filing: 17.06.2021
(51) Int. Cl.: F21S 6/00, F21V 8/00, F21S 9/02, F21Y 115/10, F21Y 113/00

(54) **AN ARTIFICIAL CANDLE**

(71) Applicant: Sirius Home A/S, 3450 Allerød (DK)
(72) Inventor: Boldsen, Peter, 8240 Risskov (DK)
(74) Representative: Høiberg P/S

(57) **Abstract**

The present disclosure relates to an artificial candle for simulating a flammable wick candle, and specifically relates to an artificial candle comprising an elongated light distributor for distributing light. One embodiment relates to an artificial candle comprising a housing for simulating the candle, a translucent cover for simulating a candle flame arranged at or above an upper part of the housing at least one light source, an elongated light distributor for distributing light from the at least one light source, and an electrical power supply for powering the light source(s), wherein the artificial candle is configured such that the elongated light distributor and the light source are arranged in extension of each other inside an elongated cavity of the translucent cover, such that light from the light source is received by the elongated light distributor, transmitted longitudinally through the elongated light distributor and scattered radially from the elongated light distributor, such that the translucent cover is illuminated by the light source and the elongated light distributor.

## Description

### Field of invention

The present disclosure relates to an artificial candle for simulating a flammable wick candle, and specifically relates to an artificial candle comprising an elongated light distributor for distributing light.

### Background

Artificial candles are electronic devices, which are alternatives to traditional flammable wick candles. As opposed to the traditional flammable wick candles, artificial candles eliminate the need for an open flame, thereby reducing potential fire hazards. In addition to improved safety, artificial candles are smokeless and require less maintenance and control when compared to flammable wick candles.

There have been various designs, methods and products for providing an artificial candle in a variety of shapes, colours and sizes. Thus, in some instances, a traditional flammable wick candle can be replaced by an artificial candle as an alternative lighting option. Although the prior art discloses a variety of artificial candles, in practise, the current technology of providing an artificial candle comes with a sacrifice of a realistic ambience and appearance when compared to a flammable candle.

In order to enhance the feel of an artificial candle, attention should be paid to the simulation of a candle flame, especially to flame movement and random flickering, colour and intensity of the flame and glow of the flame. Furthermore, design and material of the individual parts of an artificial candle, for example, candle body, wick simulator, flame simulator, light source, and engagement of the individual parts of the artificial candle with each other may play a crucial role in creating a realistic simulation of a flammable candle.

Thus, there is a need in the art for further developments for addressing the lack of realistic ambience and appearance of artificial candles.

### Summary

Considering the prior art described above, it is purpose of the present disclosure to provide an improved artificial candle for simulating a flammable candle.

It is a further purpose of the present disclosure to provide an artificial candle that provides a realistic flickering and a side glow of the flame.

It is a further purpose of the present disclosure to provide an artificial candle that provides a compact design that is safe and easy to manufacture.

It is yet a further purpose of the present disclosure to provide an artificial candle that is safe to use and provides a realistic simulation of flammable candles while providing a flexibility around a variety of designs.

Therefore in general the present disclosure relates to an artificial candle comprising a housing for simulating the candle and at least one light source. An electrical power supply for powering the light source(s) may be provided.

In the preferred embodiment an elongated light distributor for distributing light from the at least one light source is advantageously provided.

A transparent and/or translucent may be cover, aka flame cover, for simulating a candle flame, typically arranged at or above an upper part of the housing. It may advantageously be configured such that the elongated light distributor distributes light to the translucent cover. The translucent cover can be a flame-shaped cover or any shape such that a candle flame can be simulated. This foresees that at least a part of the elongated light distributor can be arranged on and/or above the upper part of the housing. Preferably, the translucent cover may comprise a cavity with an opening such that at least part of the elongated light distributor can be provided within the cavity of the translucent cover. Hence, the translucent cover can be configured such that the elongated light distributor distributes light to the translucent flame cover. The flame cover can then configured for diffusively spreading the received light, possibly in different colours, to simulate the look of a real candle flame.

A preferred embodiment relates to an artificial candle comprising a housing for simulating the candle, a translucent cover for simulating a candle flame arranged at or above an upper part of the housing at least one light source, an elongated light distributor for distributing light from the at least one light source, and an electrical power supply located in the housing for powering the light source(s). The elongated light distributor and the light source are preferably arranged in extension of each other inside an elongated cavity of the translucent cover, and configured such that light from the light source is received by a bottom end of the elongated light distributor, and transmitted longitudinally through the elongated light distributor and scattered radially from the elongated light distributor, such that the translucent cover is illuminated by the light source and the elongated light distributor.

The present applicant has sold artificial candles in many shapes and configurations over the past years. The presently disclosed artificial candle is an improvement of the known candles but some of components of the presently disclosed artificial candles can be provided from the prior art commercially available candles.

### Description of the drawings

The invention will in the following be described in greater detail with reference to the accompanying drawings:
Fig. 1 shows an exploded view of an exemplary flame cover for accommodating a short elongated light distributor and a light source.
Fig. 2 shows the components of fig. 1 in assembled form.
Fig. 3 shows the inner structure of one embodiment of the presently disclosed artificial candle.
Fig. 4a is cross-sectional side view of an embodiment of the presently disclosed artificial candle.
Fig. 4b shows a close-up of the flame cover of fig. 4a.
Fig. 5a shows one embodiment of a fibre-to-light source socket.
Fig. 5b shows a cross-sectional side view of the fibre-to-light source socket shown in fig. 5a.
Fig. 5c shows a perspective see-through view of the fibre-to-light source socket shown in figs. 5a-b.

### Detailed description of the invention

The elongated light distributor of the presently disclosed artificial candle can take several forms and can be provided in various sizes, shapes and materials. The elongated light distributor may be configured for transmitting light longitudinally inside at least one light-guiding core of the light distributor, as in an optical fiber, where the light is guided and kept inside the core by means of total internal reflection. It can be in the form of one or more optical fibers that with the primary function of guiding light from one or more light sources located in the bottom of the candle to a top of the housing, and it may be in the form of a short light distributor, e.g. a short piece of optical fiber, that is incorporated inside the flame cover with the primary function of extending the distribution of light inside the flame cover.

### Light source and light distributor incorporated in candle flame

A cost- and energy-efficient light source is a light emitting diode (LED), that can emit light for many hours when powered by standard batteries. The problem with LEDs is that light is distributed substantially equally from the rounded upper surface of the LED. In order to simulate a real wick or a real candle, the wick of an artificial candle must somehow have an elongated light distribution. Prior art solutions have presented several light sources extending inside the wick, but the present inventor have realized that a short elongated light distributor, e.g. a short piece of polymer optical fiber, in extension of a light source, such as an LED, can provide for the same effect in a more cost and energy efficient way. In particular if the elongated light distributor is configured for both guiding light longitudinally and emit light radially from the surface. In particular the present inventor have realized that a visual advantage is provided if at least part of the circumferential surface of the elongated light distributor is configured such that part of the internal light reflection that provides longitudinal guidance of light is "broken" such that light is also emitted radially from the elongated light distributor. This is particular the case if the elongated light distributor has a large light guiding core that fills most or all of the cross-sectional area of the elongated light distributor such that light guidance is close to the circumferential outer surface. Disturbance of the longitudinal light guidance can be provided by roughening / surface treating the circumferential surface of the elongated light distributor. A simple and cost-efficient solution has been to roughen the circumferential surface with sandpaper, whereby at least part of the internal reflection inside the elongated light distributor is broken such some light is emitted radially from the elongated light distributor while still some light is guided longitudinally inside the light distributor. Grinding with sandpaper is solution that easily can be incorporated in a manufacturing process, but other surface treatments can be applied to obtain the same effect. Elongated light distributors configured such that part of the light transmitted longitudinally through the elongated light distributor is scattered radially from the circumferential surface can also be commercially available.

Hence, at least a part of the elongated light distributor may be configured, e.g. by having a surface treated and/or rough circumferential surface, such that part of the light transmitted longitudinally through the elongated light distributor is scattered radially from the circumferential surface.

The elongated light distributor may furthermore comprise a rough end surface, preferably at a top end for enhancing light scattering out of the top end thereby possibly also enhancing the glow. Rough surfaces can, for example, be provided by roughening or sanding the elongated light distributor at surfaces wherein the various scattering angles are desired. The roughness value of surfaces can be optimised such that a desired light scattering and/or flame glow is obtained.

The bottom end of the elongated light distributor, i.e. the end of the elongated light distributor that faces the light source is preferably plane and smooth, i.e. not rough, to maximize the coupling of light from the light source into the elongated light distributor. A plane bottom end surface can be provided by suitable end cutting of the elongated light distributor.

The corners of one or both of the ends of the elongated light distributor can be slightly rounded, but it is not necessary.

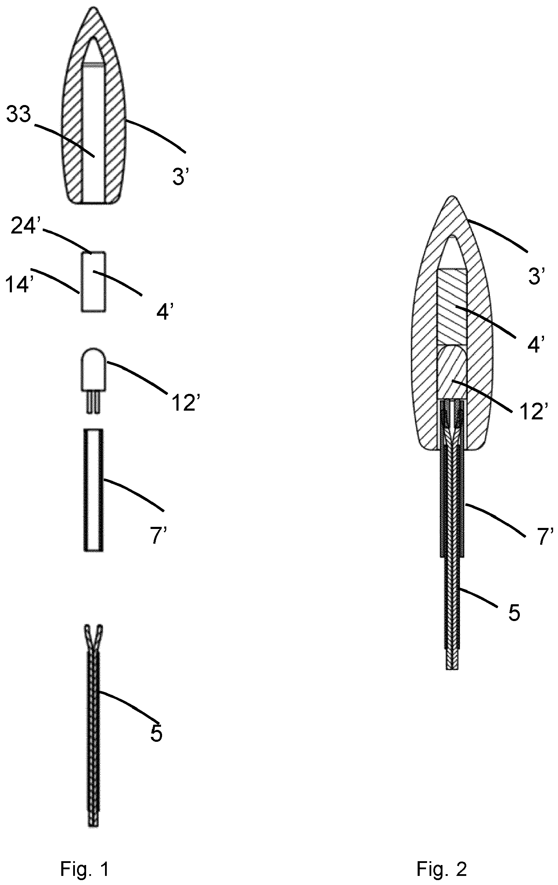

A single LED and a short elongated light distributor can be arranged in extension of each other inside the translucent cover, e.g. inside an elongated cavity as exemplified in figs. 1-2. The inner diameter of elongated cavity of the flame cover preferably matches the outer diameter of the elongated light distributor, possibly also the outer diameter of the LED. Preferably there is physical / mechanical contact between the bottom end of the elongated light distributor and the top end of the light source, such that light scattering and loss in the interface between light source and elongated light distributor is minimized. The top end of the light source, such as and LED, can be flat in order to increase the physical interface with the bottom end of the elongated light distributor, but it also works with a rounded top surface of the light source.

Hence, a lower part of the flame cover can be illuminated directly by the LED whereas the elongated light distributor arranged in extension and on top of the LED ensures that light that is emitted from a top of the LED enters the elongated light distributor. The elongated light distributor then ensures that light is guided longitudinally inside the light distributor toward the top of the flame cover but on the way inside the light distributor, some of the light can also be emitted radially from the elongated light distributor, if the total internal reflection is at partly disturbed, thereby illuminating the entire flame cover. The result is that the LED + elongated light distributor arranged in extension of each other forms an elongated light source by means of a single cost and energy efficient LED, such that the visual appearance of the flame cover is like a wick in a real candle, that forms an elongated light source. Thus, light from the LED can be transmitted longitudinally through the elongated light distributor as well as scattered radially from the elongated light distributor. When integrated inside the flame cover in this short version, the elongated light distributor can be seen as forming a short cylinder. The length of the elongated light distributor is typically less than 15 mm, preferably less than 10 mm, more preferably less than 8 mm, most preferably less than 6 mm. The elongated light distributor can have a diameter of at least 2 mm, for example 2-4 mm, preferably a diameter of 3 mm. Polymer optical fibers are available in such diameters and that matches also with the typical size of the flame cover and the LED. However, the light distributor may also be slightly larger than the outer diameter of the LED, e.g. 1-2 mm larger.

A bottom end of the elongated light distributor can be formed to at least part enclose a top end of the at least one light source, e.g. an LED, e.g. the elongated light distributor is cut in a rounded way or by providing a notch or indentation or hole in the bottom end such that the LED better fits with the light distributor and such that more light emitted from the LED enters the light distributor. This would in particular be relevant if the outer diameter of the elongated light distributor is larger than the outer diameter of the light source. E.g. with a 2 mm diameter LED and a 4 mm diameter (or larger) elongated light distributor.

### Light distributor as light guide inside housing

As stated previously the function of the elongated light distributor can also be to transport light from at least one light source, e.g. in the bottom of the housing, and to a flame cover at the top of the housing, e.g. in the form of one or more optical fibers for guiding the light by total internal reflection - and minimizing scattering of the light on the way. The elongated light distributor can be shielded, e.g. by a black sheath, such that no light is emitted from the light distributor inside the housing.

The elongated light distributor may comprise a plurality of elongated light guides, such as optical fibres, for instance polymer optical fibres, e.g. arranged in a bundle. If the elongated light distributor comprises more than one light guide, it can be possible to also have more than one light source, such that each light source is coupled to onbe or more light guides. It can be difficult to have more than one light source inside the flame cover, but by using several light guides, the number of light sources can be increased and also located inside the housing. Another advantage thereof is that light sources with different wavelengths and/or different colour temperatures can be used such that the total light visualization from the artificial candle can be varied flexibly.

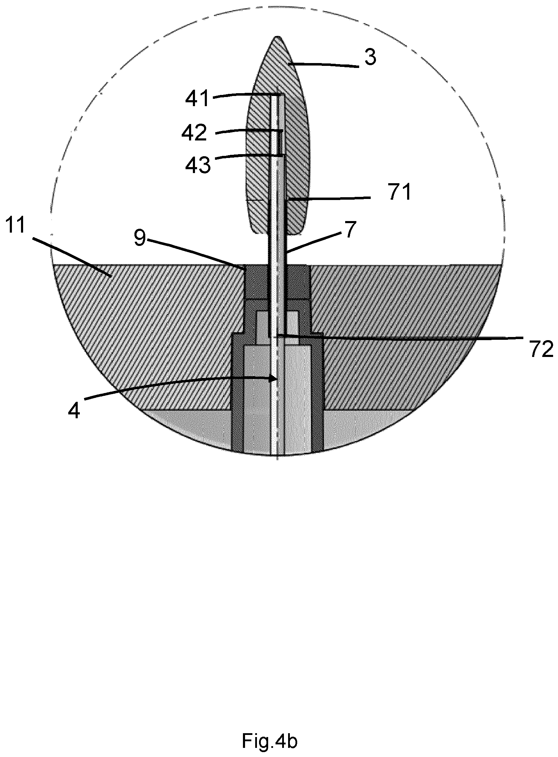

Another advantage of utilizing several light guides in the elongated light distributor is that the different light guides can be flexibly arranged inside the flame cover, e.g. such that the top ends of the different light guides are arranged at different longitudinal positions inside the flame cover, as exemplified in fig. 4b. This is both a way to longitudinally extend the light distribution and light illumination inside the flame cover, but it is also a way to more realistically simulate the light from a real candle flame where the temperature in the bottom near the wick typically is around 800 degrees Celsius, whereas the top part of the candle flame can be around 1400 degrees Celsius. Hence, by having different light guides, e.g. three different light guides, with top ends extending different (longitudinal) heights inside the flame cover, supplied with light from light sources, e.g. three different light sources, such as LEDs, with different colour temperatures, it is possible to better simulate a real candle flame. The colour temperatures of the light sources may be between 1000 K and 4000 K, preferably between 2500 and 3500 K, such as warm white around 3000 K, warm orange around 2500 K and warm yellow around 3500 K. Also in this case the light guides can be provided with rough surfaces of the circumferential surface which is inside the flame cover, to further increase the radial illumination.

### Housing, power supply and light source

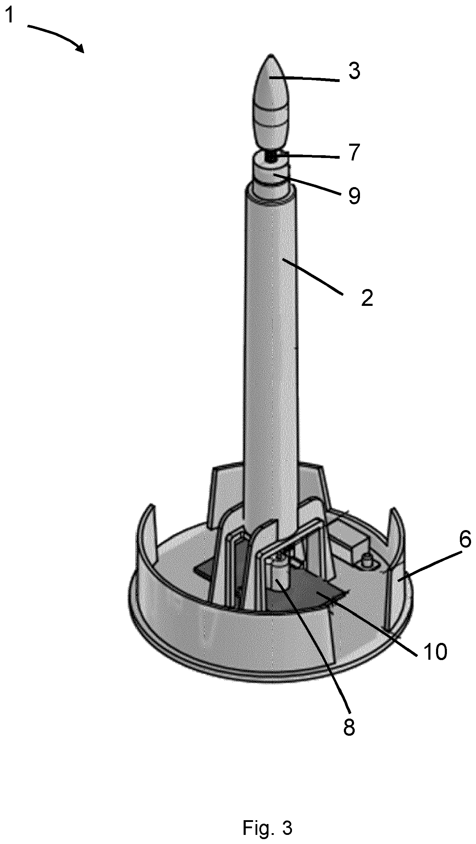

The light source can be connected with an electrical power supply through at least one wire inside the housing. A cavity may be provided within the housing, as exemplified in figs. 3-4. The cavity can extend from the bottom portion of the housing to an upper portion of the housing, and may be configured for accommodating and covering electrical wires and/or the elongated light distributor. Extension of the elongated light distributor and/or electrical wire can be supported by the geometry of the housing cavity. The cavity may be formed by a central hollow pillar that also provides structural stability to the candle. The hollow pillar can be located along the vertical central axis of the housing. The light source(s) may be provided anywhere in the housing, but preferably in a bottom part of the housing, in a top part of the housing and/or inside the flame cover, as explained above. When the light source is located at the bottom of the housing, a larger space for a plurality of elongated light guides, such as fibre optic cables, can be provided. Furthermore, a larger space for a plurality of light sources can be obtained.

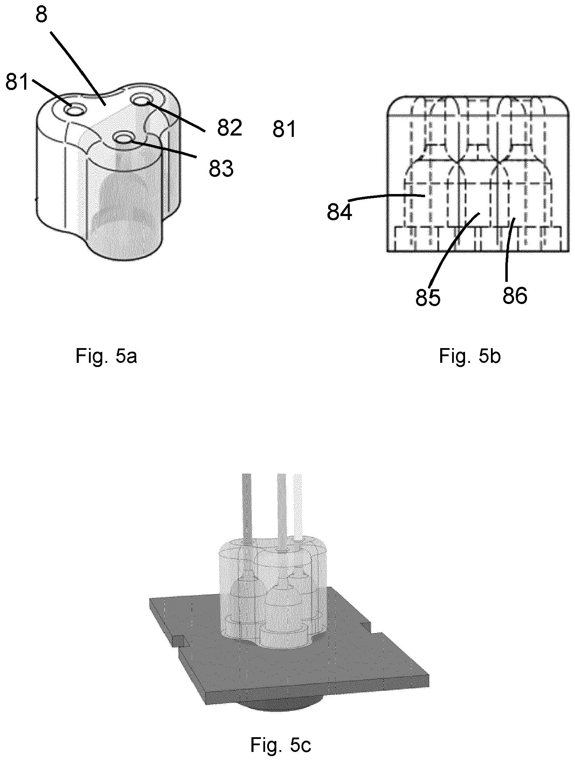

In one embodiment, the artificial candle may comprise a fibre-to-light source socket having a top part for receiving at least one optical fibre, or the elongated light distributor, and a bottom part for receiving and covering at least one light emitting diode, exemplified in fig. 5. This implies that said socket can be designed to fit different light emitting diodes and fibre optics. The socket provides structural stability in the connection between light source and light guide, but making sure that the mechanical engagement between light source and light guide is stable. However, the socket may also be provide in an opaque material such that the inevitable light loss when coupling light from e.g. an LED into an optical fibre, is not distributed into the housing but is absorbed by the socket.

The power supply and the at least one light source can be arranged within a cavity of the housing. Alternatively, the power supply and the at least one light source can be arranged within said fibre-to-light source socket within the cavity. Typically, in this embodiment, the at least one light source may be arranged in the bottom of the housing on a PCB within said fibre-to-light source socket. Thus, in one embodiment, the at least one light source can be mounted directly on a PCB. The elongated light guide can extend from the bottom of the housing to and above the upper portion of the housing.

The flame cover is typically arranged slightly above a top part of the housing, as in a real candle. In the presently disclosed artificial candle the connection between the housing is electrical and/or optical. If the light source is incorporated in the flame cover, an electrical wire must connect the light source. If the light source(s) is in the housing, the connection to the flame cover is typically optical via the elongated light distributor providing light to the flame cover. In either case the connection between the housing and the flame cover can be covered with a black sheath, such as crimp flex, to simulate the appearance of a wick. Hence, when the elongated light distributor and/or electrical wire extends out from the hollow pillar above the top of the housing, at least a part thereof can be covered by a heat shrinkable tubing.

Advantageously, in an embodiment, the artificial candle can be configured to adjust the light emittance, such as power, intensity, on/off and/or colour temperature, of the at least one light source in a predefined pattern. Alternatively, a plurality of light sources is provided and the artificial candle may be configured to adjust the light emittance of each of the light sources in a predefined pattern. Adjusting a lighting characteristics, light emittance and/or defining a glow pattern would enable programming a flickering effect of the presently disclosed candle. Additionally, a staggered design of light guides, such as providing a various heights of fibre optics, and/or roughened surfaces of said light guides or the elongated light distributor would enhance a flickering effect with a realistic sideglow. LEDs are very easily programmable and all sorts of flickering effect are imaginable with one or more, similar or different light sources, possibly in different colours, possibly extending to different heights inside the flame cover.

The presently disclosed artificial candle can further comprise a housing light source arranged within the housing, such as at the top of the housing, and configured for illuminating the housing. This is to simulate a real candle where a top part of the candle seems to be illuminated by the candle flame.

### Examples

The presently disclosed artificial candle will now be described more fully hereinafter with reference to the accompanying exemplary embodiments shown in the drawings, when applicable. The same reference numbers refer to the same elements throughout the document.

Fig. 1 shows an exploded cross-sectional side view of an exemplary flame cover for accommodating a short elongated light distributor and a light source and fig. 2 shows the components of fig. 1 in assembled form. According to embodiment shown in figs 1-2, the translucent flame cover 3' incorporates one light source in the form of an LED 12', an elongated light distributor in the form of a short piece of polymer optical fiber (POF), e.g. PMMA fiber 4' for distributing light from the LED 12'. The optical fiber 4' has a physical contact with the LED 12' when incorporated into the elongated cavity 33 of the translucent flame cover 3' and received light from the LED 12' which is guided longitudinally and emitted radially along the optical fiber 4'. PMMA plastic optical fibers are very cost efficient and can be provided in many configurations, for example in diameters from 0.75 to 5 mm in diameter.

The optical fiber 4' and the LED 12' are arranged in extension of each other inside the cavity 33 of the translucent cover 3'. Thus, light from the light source 12' is transferred longitudinally through the fiber 4', scatters radially from the optical fiber 4' and illuminates the translucent flame cover 3'.

The LED 12' can be connected to an electrical power supply (not shown) through a electrical wire 5. An upper part of the wire 5, below the LED 12', is arranged with a substantially black sheath 7' for simulating a candlewick. Thus, a part of the sheath 7' below the LED 12' is provided within the cavity 33 of the translucent cover 3'. A part of the sheath 7' can extend outside of the translucent flame cover 3'. The length of the sheath 7' can vary such that a realistic candlewick can be simulated.

Furthermore, the optical fiber 4' comprises a rough circumferential surface 14' and a rough end surface 24' for disturbing the total internal reflection inside the core of the optical fiber such that light is emitted radially from the fiber 4' thereby enhancing the light scattering for a realistic glow of the flame cover. The rough surface can be provided by sanding the surface of a standard 3 or 4 mm polymer optical fiber with sandpaper, just a few strokes with sandpaper of normal grit sandpaper, e.g. grit size between 120 and 400, e.g. 180, is enough to provide a rough surface of the fiber and thereby radial light emittance. A rougher surface will provide more radial light emittance, but thereby also reduce the amount of light which is guided longitudinally. Hence, the roughening of the surface, e.g. by sandpaper, can be adapted to the application.

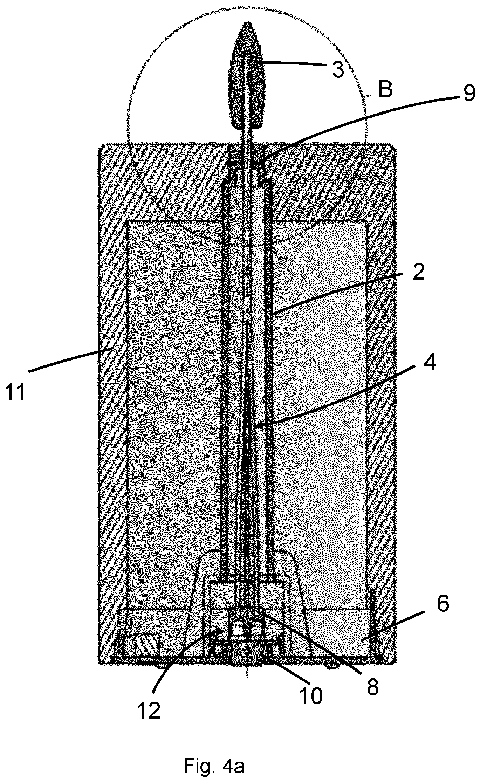

Fig. 3 shows the inner structure of one embodiment of the presently disclosed artificial candle 1. The artificial candle 1 comprises a base 6 at the bottom of the artificial candle 1. The base 6 comprises multiple cut-outs such that other parts of the artificial candle 1 such as a PCB 10, a battery holder (not shown), a fibre-to-light source socket 8 can be stored in and/or assembled to the base 6. From a central part of the base 6, a hollow pillar 2 extends vertically. The hollow pillar 2 is therefore arranged centrally inside a main body 11, as shown in Fig. 4a, thereby forming the structure of the housing. Above the hollow pillar 2, a wax plug 9 having a similar diameter to the extended end diameter of the hollow pillar 2 is provided. The artificial candle 1 further comprises a flame cover 3 for simulating a candle flame. Additionally, a black tubing 7 provided below the flame cover 3 is used to simulate a candle wick.

A detailed cross-sectional view of the different parts of the embodiment of the artificial candle, shown in Fig. 3, can be seen in Fig. 4a. the main body 11 of the artificial candle is a hollow cylinder. The base 6 is provided in connection with the main body 11 at the bottom of the hollow cylinder. The base 6 also closes the hollow main body 11 from the bottom.

A PCB 10 is placed on the base 6 and connected to light sources 12. The light sources are three LEDs placed within a cavity of the fibre-to-light source socket 8. The fibre-to-light source socket 8 is arranged such that light sources can physically contact with the elongated light distributor formed by three optical fibres 4. The optical fibres 4 extend through the centre of the candle body 11 within the hollow pillar 2 configured for accommodating and shielding the optical fibres 4. The optical fibres end within a cavity of the flame cover 3 above the candle body 11. Thus, the light can be transferred from the light sources 12 through the optical fibres 4 to the cavity of the flame cover 3.

Fig. 4b shows a detailed view of an upper portion of the artificial candle, specifically the artificial candle flame, which is marked as section 'B' in Fig. 4a. As shown in Fig. 4b, the three optical fibres 4 extend to different heights (41, 42, 43) within the cavity of the flame cover 3. Thus, the light is transferred to different heights 41, 42, 43 within the flame cover 3. The three light guides of optical fibres 4 that are cut off in staggered heights, therefore can simulate the side glow of a candle flame. In the example in fig. 4b the flame cover is approx. 25 mm in height, the cavity extends 18.5 mm into the cavity. The height of the first optical fiber inside the cavity is 4.5 mm, the next fiber extends to a height of 10.5 mm and the third fiber extends to a height of 13.5 mm, i.e. approx. 3-4 mm height difference between the fibers. The cavity is 3 mm in diameter. However, the configuration and lengths of the fibers inside the cavity depends on the needed visual expression.

Furthermore, the flame cover 3 is made in a flame shape and from a semi-transparent material. The flame cover comprises a cavity for receiving the top end of the optical fibres, which is 1-2 mm diameter polymer optical fibers. Thus, the optical fibres within the flame cover 3 can illuminate the flame cover 3 from inside of the flame cover 3. Optionally, the flame cover 3 can be omitted and the artificial candle can be used without the flame cover, and where the top end of the optical fibres form the "flame".

At least a part of the optical fibres 4 at a top end of the housing 11 is arranged with a black tubing 7 for simulating a candlewick. The diameter of the candle wick is 2.2 mm. The diameter of the tubing 7 can be arranged in accordance with the diameter of the optical fibres 4. The tubing can be heat-shrinkable tubing or similar for a few centimetre in length for simulating a candlewick. For example, a lowermost level 72 and an uppermost level 71 of the tubing 7 extending from the cavity of the hollow pillar 2 to the cavity of the flame cover 3 can simulate a candlewick.

Fig. 5 shows one embodiment of the fibre-to-light source socket 8. The fibre-to-light source socket 8 comprises three cavities 84, 85, 86 for accommodating the three LEDs. Thus, the LEDs can be connected to three light guides through the holes 81, 82, 83 provided on top of the fibre-to-light source socket 8. Thus, the fibre-to-light source socket 8 receives at least one optical fibre, or a bundle of optical fibres or an elongated light distributor from one of the holes 81, 82, 83 provided on the fibre-to-light source socket 8. Within a cavity 84, 85, 86 of the fibre-to-light source socket 8 at a bottom part, at least one light emitting diode can be received and covered. Preferably, optical fibres can be arranged in extension of a different light source in each cavity 84, 85, 86, such that light is transmitted longitudinally through each one of the optical fibres, separately. The arrangement of the socket 8 on three LEDs on a PCB is shown in fig. 5c with the three optical fibres extending vertically up from the socket 8. In fig. 5c the socket is shown to be transparent but it is preferably opaque such that no light escapes from the socket 8. The LEDs are typically 3 mm in diameter whereas the optical fibres in fig. 5c are only 1 mm in diameter, hence a certain light loss is inevitable unless expensive lenses are provided to couple the light from the light source into the optical fibres.

The LEDs used in the examples are 3 volt LEDs with a diameter of 3 mm. 3V LEDs can be powered by just a single button cell battery, two standard AA, or even AAA or AAAA, batteries or a similar power supply, e.g. a rechargeable power supply. LEDs are very energy efficient and can run for several hours powered by standard batteries. The selection of the LED depends on the application, a tealight requires a small power LED that can be driven but one of a few button cell batteries, whereas a larger candle requires an LED with larger wattage and thereby a larger power supply.

### Items

1. An artificial candle comprising
   - a housing for simulating the candle,
   - at least one light source,
   - an elongated light distributor for distributing light from the at least one light source, and
   - an electrical power supply for powering the light source(s).
2. The artificial candle according to any of the preceding items, further comprising a translucent cover for simulating a candle flame arranged at or above an upper part of the housing and configured such that the elongated light distributor distributes light to the translucent cover.
3. The artificial candle according to any of the preceding items, wherein the elongated light distributor is configured for transmitting light longitudinally inside at least one light guiding core of the light distributor.
4. The artificial candle according to any of items 2-3, wherein at least part of the elongated light distributor comprises a rough circumferential surface configured such that part of the light transmitted longitudinally through the elongated light distributor is scattered radially from the rough circumferential surface.
5. The artificial candle according to any of the preceding items, wherein the elongated light distributor comprises a rough end surface.
6. The artificial candle according to any of the preceding items, wherein the light source is connected with the electrical power supply through a conducting wire inside a cavity of the housing.
7. The artificial candle according to item 6, wherein at least a part of the conductive wire is arranged with a substantially black sheath for simulating a candlewick.
8. The artificial candle according to item 7, wherein the substantially black sheath is arranged within the cavity of the housing.
9. The artificial candle according to any of the preceding items, wherein the elongated light distributor is a single optical fibre, such as a polymer optical fibre.
10. The artificial candle according to any of the preceding items, wherein the at least one light source is a single light emitting diode (LED) and wherein the artificial candle is configured such that the elongated light distributor and the LED are arranged in extension of each other inside an elongated cavity of the translucent cover, such that light from the LED is transmitted longitudinally through the elongated light distributor and scattered radially from the elongated light distributor, such that the translucent cover is illuminated by the LED and the elongated light distributor.
11. The artificial candle according to any of the preceding items, wherein the length of the elongated light distributor is less than 15 mm, preferably less than 10 mm, more preferably less than 8 mm, most preferably less than 6 mm.
12. The artificial candle according to any of the preceding items, wherein a bottom end of the elongated light distributor is formed to enclose at least a top end of the at least one light source.
13. The artificial candle according to any of the preceding items, wherein the elongated light distributor has a diameter of at least 2 mm, preferably a diameter of 3 mm.
14. The artificial candle according to any of the preceding items 1-8, wherein the elongated light distributor comprises a plurality of elongated light guides, such as optical fibres, such as polymer optical fibres, preferably arranged in a bundle.
15. The artificial candle according to item 14, wherein the elongated light distributor is configured for distributing light from the at least one light source to an artificial candle flame at a top end of the housing and wherein at least two of the optical fibres, preferably at least three of the optical fibres, extend to different heights in the artificial candle flame.
16. The artificial candle according to any of the preceding items, comprising a plurality of light sources.
17. The artificial candle according to any of the preceding items, comprising a plurality of light sources, such as a plurality of light emitting diodes, wherein separate light sources are configured to emit light with at least two different colour temperatures, preferably at least three different colour temperatures, between 1000 and 4000 K, such as warm white (3000 K), warm orange and warm yellow.
18. The artificial candle according to item 17, configured such that light with different colour temperatures are guided in separate light guides inside the elongated light distributor.
19. The artificial candle according to any of the preceding items, wherein the elongated light distributor is arranged in extension of least one light source such that at least part of the light emitted from the at least one light source enters the elongated light distributor, and wherein opaque heat-shrinkable tubing preferably is arranged around at least a top part of the at least one light source and a bottom part of the elongated light distributor, such that light from the at least one light source that does not enter the elongated light distributor is absorbed by the opaque heat-shrinkable tubing.
20. The artificial candle according to any of the preceding items, comprising a fibre-to-light source socket having a top part for receiving at least one optical fibre, or the elongated light distributor, and a bottom part for receiving and covering at least one light emitting diode.
21. The artificial candle according to any of the preceding items, wherein the elongated light distributor comprises at least two optical fibres, each are arranged in extension of an at least one light source, such that light is transmitted longitudinally through each one of the optical fibres, separately.
22. The artificial candle according to any of the preceding items, wherein the least one light source is arranged in the bottom of the housing.
23. The artificial candle according to any of the preceding items, wherein the least one light source is arranged in the top of the housing.
24. The artificial candle according to any of the preceding items, wherein at least a part of the elongated light distributor at a top of the housing is arranged with a black and/or opaque sheath for simulating a candlewick.
25. The artificial candle according to any of the preceding items, comprising a hollow pillar arranged centrally inside the housing for accommodating and shielding the elongated light distributor.
26. The artificial candle according to any of the preceding items, wherein the least one light source is mounted directly on a PCB.
27. The artificial candle according to any of the preceding items, configured to adjust the light emittance, such as power and/or colour temperature, of the at least one light source in a predefined pattern.
28. The artificial candle according to any of the preceding items, wherein the at least one light source comprises a plurality of light sources and wherein the artificial candle is configured to adjust the light emittance of each of the light sources in a predefined pattern.
29. The artificial candle according to any of the preceding items, further comprising a housing light source arranged within the housing, such as at the top of the housing, and configured for illuminating the housing.

## Claims

1. An artificial candle comprising
- a housing for simulating the candle,
- a translucent cover for simulating a candle flame arranged at or above an upper part of the housing,
- at least one light source,
- an elongated light distributor for distributing light from the at least one light source, and
- an electrical power supply located in the housing for powering the light source(s),
wherein the elongated light distributor and the light source are arranged in extension of each other inside an elongated cavity of the translucent cover, and configured such that light from the light source is received by a bottom end of the elongated light distributor, transmitted longitudinally through the elongated light distributor and scattered radially from the elongated light distributor, such that the translucent cover is illuminated by the light source and the elongated light distributor.

2. The artificial candle according to claim 1, wherein the elongated light distributor is configured for transmitting light longitudinally inside at least one light guiding core of the light distributor.

3. The artificial candle according to any of preceding claims, wherein at least part of the elongated light distributor comprises a rough circumferential surface for increasing the radial emittance of light.

4. The artificial candle according to any of the preceding claims, wherein the elongated light distributor comprises a rough top end surface.

5. The artificial candle according to any of preceding claims 3-4, wherein the rough surface of the elongated light distributor is provided by sanding the surface, such as sanding the surface with sandpaper.

6. The artificial candle according to any of the preceding claims, wherein the light source is connected with the electrical power supply through a conducting wire inside a cavity of the housing and wherein at least the part of the conductive wire extending between the translucent cover and the housing is arranged with a substantially black sheath for simulating a candlewick.

7. The artificial candle according to any of the preceding claims, wherein the at least one light source is a single light emitting diode (LED).

8. The artificial candle according to any of the preceding claims, wherein the inner diameter of the elongated cavity of the translucent cover matches the outer diameter of the elongated light distributor, preferably also matching the outer diameter of the light source.

9. The artificial candle according to any of the preceding claims, wherein the elongated light distributor is a single optical fibre, such as a polymer optical fibre.

10. The artificial candle according to any of the preceding claims, wherein the length of the elongated light distributor is less than 10 mm, preferably less than 8 mm, most preferably less than 6 mm.

11. The artificial candle according to any of the preceding claims, wherein a bottom end of the elongated light distributor is formed to enclose at least a top end of the at least one light source.

12. The artificial candle according to any of the preceding claims, wherein the elongated light distributor has a diameter of at between 2 mm and 5 mm, preferably a diameter of 3 mm.

13. The artificial candle according to any of the preceding claims, comprising a hollow pillar arranged centrally inside the housing for accommodating and shielding an electrical wire connecting the power supply and the light source.

14. The artificial candle according to any of the preceding claims, configured to adjust the light emittance, such as power and/or colour temperature, of the at least one light source in a predefined pattern.

15. The artificial candle according to any of the preceding claims, further comprising a housing light source arranged within the housing, such as inside a top of the housing, and configured for illuminating the housing.
